(19) **Europäisches Patentamt / European Patent Office / Office européen des brevets**

(11) **EP 3 835 169 B1**

(12) **EUROPEAN PATENT SPECIFICATION**

(45) Date of publication and mention
of the grant of the patent:
**13.03.2024 Bulletin 2024/11**

(21) Application number: **20213314.6**

(22) Date of filing: **11.12.2020**

(51) International Patent Classification (IPC):
**B61L 15/00** *(2006.01)*    **B61L 25/02** *(2006.01)*
**B61L 25/06** *(2006.01)*    *B60M 1/28* *(2006.01)*

(52) Cooperative Patent Classification (CPC):
**B61L 15/0081; B60M 1/28; B61L 25/026;
B61L 25/06**

(54) **SYSTEM, METHOD, AND RAILWAY VEHICLE FOR MONITORING A CONTACT WIRE OF AN OVERHEAD POWER SUPPLY LINE**

SYSTEM, VERFAHREN UND SCHIENENFAHRZEUG ZUR ÜBERWACHUNG EINES FAHRDRAHTES EINER OBERLEITUNG

SYSTÈME, PROCÉDÉ ET VÉHICULE FERROVIAIRE DE SURVEILLANCE D'UN FIL DE CONTACT D'UNE LIGNE D'ALIMENTATION ÉLECTRIQUE AÉRIENNE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **12.12.2019 IN 201921051628**

(43) Date of publication of application:
**16.06.2021 Bulletin 2021/24**

(73) Proprietor: **ALSTOM Holdings
93400 Saint-Ouen-sur-Seine (FR)**

(72) Inventors:
• **SURESH, Praveen
390016 Vadodara, Gujarat (IN)**
• **GANESAN, Muniandi
626001 Virudhunagar,Tamilnadu (IN)**

(74) Representative: **Lavoix
2, place d'Estienne d'Orves
75441 Paris Cedex 09 (FR)**

(56) References cited:
**EP-A1- 2 404 777**    **EP-A1- 2 843 361
EP-A1- 2 966 400**

• **DIRK WEHRHAHN: "Beruehrungslose Messung der Fahrdrahtlage", ETR EISENBAHNTECHNISCHE RUNDSCHAU, HESTRA-VERLAG. DARMSTADT, DE, vol. 61, no. 6, 1 June 2012 (2012-06-01), pages 22-24, XP001526446, ISSN: 0013-2845**

**Description**

The present invention relates to a system, a method, and a railway vehicle for monitoring a contact wire of an overhead power supply installed along an associated railway line.

In the field of railway applications, it is well known the use of power lines which run along the extension of a railway line and are used for electrically feeding railway vehicles via an operative coupling with current collector equipment provided on-board of the vehicles to be powered.

A typical example of such applications is represented by aerial lines suspended at a certain height above the rail tracks, namely the so-called catenaries, wherein electrical power is transferred to the travelling railway vehicles via roof-mounted pantographs, or similar current collector equipment, e.g. bow collectors, trolley poles, and the like.

In particular, in these applications, the pantograph, or like equipment, scrubs against the contact wire of a catenary along which there flows the current from the power grid, thus allowing the transfer of feeding power to the transiting railway vehicle.

In order to ensure reliable operations of the railway line it is necessary to keep the integrity of the contact wire and have an adequate interaction between the contact wire and the pantographs or like equipment; indeed, an anomalous interaction between pantographs and contact wires can lead to potentially risky situations, such as excessive heating, arcing, erosion of the surface of contact wire, et cetera.

However, for such systems, and in particular for the contact wire, the risk of having defective parts is intrinsic and substantially unavoidable, for instance due to the mechanical stresses exerted by the friction with the pantographs, or just due to the usual aging and mechanical wearing out during lifetime service.

For example, any portion of a contact wire may reach an unacceptable diameter due to mechanical consumption, or it may be suspended at a height which is not compatible or adequate for a proper interaction with the pantographs, or it may be subject to excessive staggering.

Clearly, it is important that the onset of any defective and potentially dangerous condition is detected as timely and as precisely as possible in order to introduce corrective actions and prevent malfunctioning or failure that could result in long and unacceptable perturbations, or even disruptions, of the railway traffic.

These issues have been faced over the years by implementing different types of measures.

One solution foresees the use of fully automated vehicles specifically designed for performing maintenance operations along railway lines. Although such vehicles perform properly, they are rather expensive and in some cases not affordable by railway operators.

An alternative and more classical solution foresees the use of vehicles not equipped with automated systems but provided with means suitable for carrying out manual inspection and maintenance.

In this case, there is a risk of human errors, and minor or major accidents may occur during inspections; further, such manual inspections entail interrupting the power supply for the section under inspection and therefore no traffic can be routed through that section during maintenance and, in any case, they cannot take into account the real evolution and actual operative conditions between an executed intervention and the scheduled following one.

EP 2 966 400 A1 discloses an overhead line position measuring apparatus which includes: first and second three-dimensional measuring devices; first and second cameras; a region of interest setting part for setting at least one region of interest based on angle data and distance data generated by each of the first and second three-dimensional measuring devices; an image processing part for performing image processing on each of first and second image data respectively generated by the first and second cameras to mask the image except for the region of interest, and accumulating the first and second image data into amemory; an overhead line extracting part for extracting an overhead line satisfying a predetermined condition from a two-dimensional image represented by each of the accumulated first and second image data; and an overhead line position calculating part for calculating a position of the overhead line in relation to the railway vehicle based on coordinates of the overhead line extracted by the overhead line extracting part.

Published article «Beruehrungslose Messung der Fahrdrahtlage», Dirk Wehrhahn, XP001526446, discloses a contactless system for measuring the actual height and stagger of a contact wire of an overhead power line. The system uses sensors which output ultrasonic impulses reflected by the contact wire towards the sensors themselves. Two laser sensors can be used to determine the lateral distances of a mast of the line from the track center together with the contact wire position measurement. Errors in the measurements due to lateral displacement of the vehicle or to changes in height of the vehicle due to deflection, or for rolling of the vehicle due to differences in suspensions can be compensated by using additional ultrasonic or laser sensors. The system can be equipped also with a camera taking pictures along the travel; in this way, images of individual locations where deviations have occurred can be sent directly to a service department for determining the mast position by evaluating the camera images.

EP 2 404 777 A1 discloses a device intended to monitor the condition of a railway supply line when the supply line is in contact with a head of a pantograph of a vehicle. The device includes a camera for monitoring parameters indicative of operating capability of the supply line. The device also includes a reflective element comprising a pattern intended to be arranged onto the pantograph head. The camera is arranged on the vehicle so as to register the pattern position regarding a vertical direction.

Therefore, it is evident from the above that there is substantial room and need for further improvements in the monitoring of conditions of overhead power supply lines of railways lines, and in particular of contact wires thereof.

To this end, it is a main aim of the present invention to provide a solution for a more timely and precise monitoring of any part of a contact wire of an overhead power supply line used for powering railways vehicles travelling along a railway line.

Within the scope of this aim, an object of the present invention is to provide a solution which allows monitoring the actual condition of a contact wire of an overhead power supply associated to a railway line, and in particular suitable to detect, substantially in real time, the onset of any defective part or condition along the contact wire.

Yet a further object of the present invention is to provide a solution for monitoring the actual condition of a contact wire of an overhead power supply associated to a railway line, which is highly reliable, relatively easy to realize and implement at competitive costs.

This aim, these objects and others which will become apparent hereinafter are achieved by a control system for monitoring a contact wire of an overhead power supplying line installed along an associated railway line according to claim 1.

The above mentioned aim and objects of the present invention are also achieved by a method for monitoring a contact wire of an overhead power supplying line installed along an associated railway line, according to claim 10.

Finally, the present invention provides also a railway vehicle according to claim 9.

Further characteristics and advantages will become apparent from the description of some preferred but not exclusive exemplary embodiments of a control system, a method, and a related vehicle according to the invention, illustrated only by way of non-limitative examples with the accompanying drawings, wherein:

Figure 1 is a block diagram schematically illustrating a control system for monitoring a contact wire of an overhead power supply line installed along an associated railway line according to the invention;

Figure 2 is a flow chart illustrating a method for monitoring a contact wire of an overhead power supply line installed along an associated railway line according to the invention;

Figure 3 shows schematically an exemplary embodiment of a railway vehicle equipped with sensors for detecting parameters of a contact wire, according to the present invention.

Figures 4-5 show a pantograph equipped with sensors for detecting parameters of a contact wire, which may be part of the embodiments of Figures 1 and 3.

It should be noted that in order to clearly and concisely describe the present disclosure, the drawings may not necessarily be to scale and certain features of the disclosure may be shown in somewhat schematic form.

Further, when the term "adapted" or "arranged" or "configured" or "shaped", is used herein while referring to any component as a whole, or to any part of a component, or to a combination of components, it has to be understood that it means and encompasses correspondingly either the structure, and/or configuration and/or form and/or positioning.

In particular, for electronic and/or software means, each of the above listed terms means and encompasses electronic circuits or parts thereof, as well as stored, embedded or running software codes and/or routines, algorithms, or complete programs, suitably designed for achieving the technical result and/or the functional performances for which such means are devised.

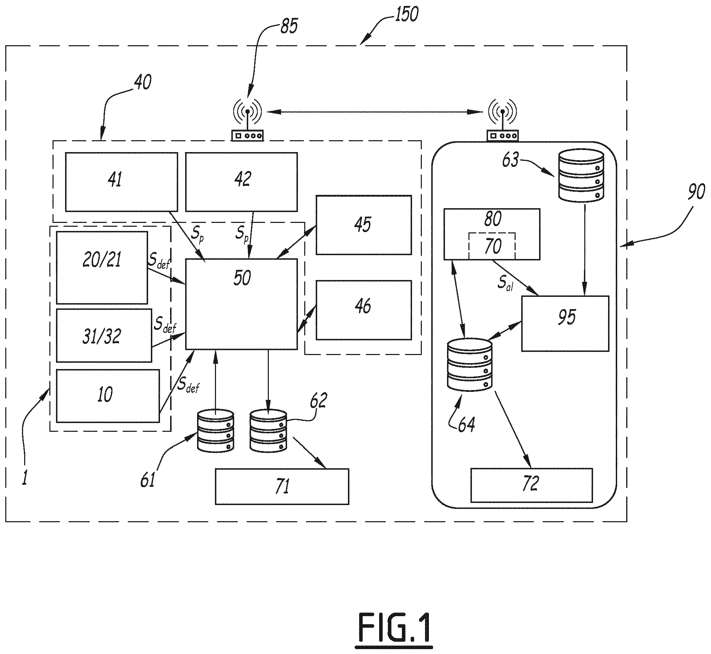

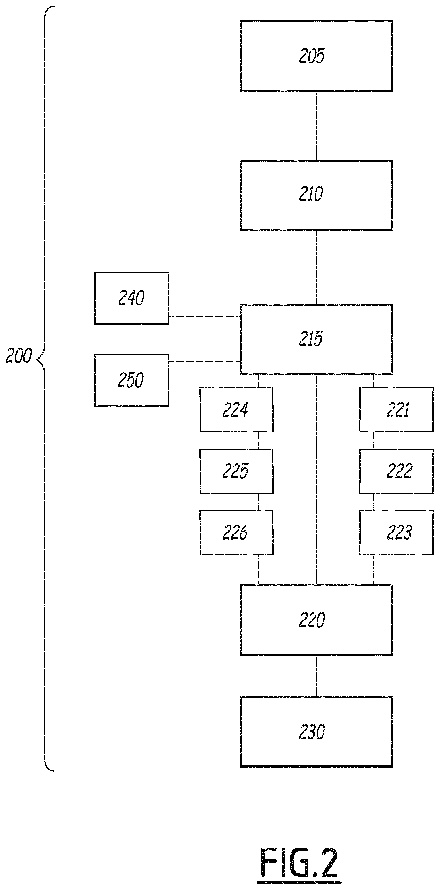

A system and a method for monitoring a contact wire of an overhead power supply line 100 of a railway line are schematically illustrated in figures 1 and 2, and therein indicated by the corresponding overall reference numbers 150 and 200, respectively.

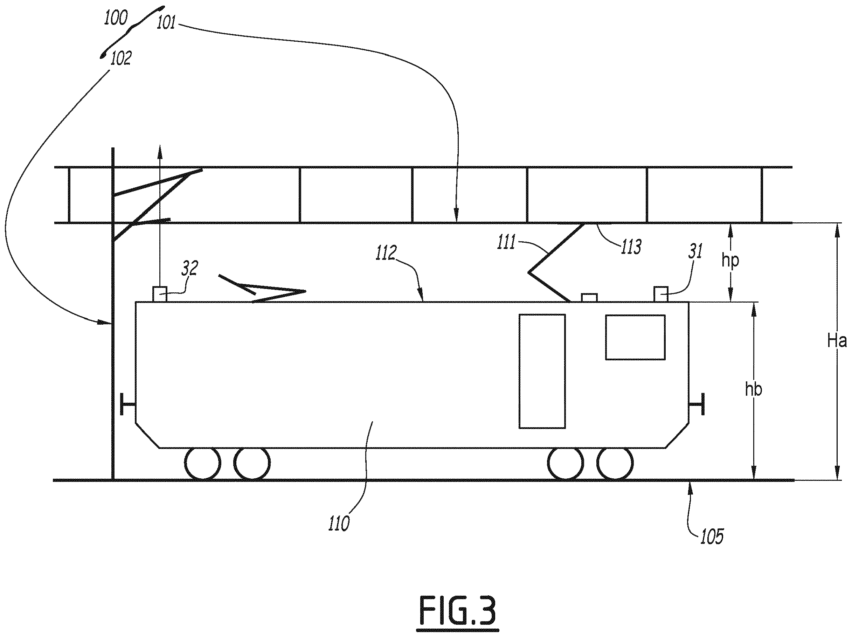

As schematically illustrated in figure 3, and according to solutions well known, the overhead power supply line 100 is installed along an associated railway line 105 and comprises a contact wire 101, and a plurality of cantilever-shaped poles, only one of which is represented in figure 3 for ease of illustration and therein indicated by the reference number 102.

The various poles 102 support a contact wire 101 that runs along at least a portion of the railway line 105 and is suitable to supply a railway vehicle travelling along the railway line 105, schematically represented by the reference number 110, via friction with an associated current collector equipment comprising one or more pantographs 111 mounted on the roof of the vehicle 110 itself, for example on the locomotive of a train.

As those skilled in the art would easily appreciated, the term railway vehicle 110 herein used encompasses any type of railway vehicle which, when travelling along a railway line, is suitable to be electrically powered via the contact wire 101 and associated pantograph(s) 111, or like equipment; hence such term encompasses any suitable type of railway vehicles, such as a train, a tramways, which can be composed by one or more carriages or vehicles, or the like.

As illustrated in figure 1, the control system 150 according to the invention comprises at least:

- a control and processing unit 50, preferably mounted on board of the railway vehicle 110;

- one or more sensors 1, which are suitable to be mounted on board of the railway vehicle 110 and are adapted to provide to the control and processing unit 50, preferably in real time and substantially continuously, first signals $S_{det}$ indicative of one or more corresponding parameters, such as Height (H), Diameter (D), Stagger (S), of the contact wire 101 while the railway vehicle 110 is travelling along the railway line 105;

- one or more devices 40 which are arranged to provide to the control and processing unit 50 second signals $S_P$ suitable for calculating the position P of the railway vehicle 110 along the railway line 105.

According to an embodiment, the one or more devices 40 preferably comprise at least one multi-axis inertial sensor suitable to be mounted on-board of the railway vehicle 110; in particular, the one or more devices 40 comprises at least one of, preferably both, a multi-axis gyroscope 41 and a multi-axis accelerometer 42.

In particular, the multi-axis gyroscope 41 is for example a three-axis gyroscope and measures the three-axis rotational movement of the vehicle 110 which can be used for computing the slopes, curves, angles of the tracks along the railway line 105; in turn, the multi-axis accelerometer 42 is also, for instance, a three-axis accelerometer 42 which measures the actual acceleration of the vehicle 110, and is used to propagate the distance between two catenary poles 102.

The three-axis gyroscope 41 and the three-axis accelerometer 42 can be constituted by commercially available MEMS devices.

According to a possible embodiment, the control system comprises at least one or more of: one or more databases storing data selected from the group comprising, but not limited to, predefined and calculated reference values H, D, S for the one or more parameters of the contact wire 101, identification and/or localization data for parts, e.g. the contact wire 101 and the poles 102, of the power supplying line 100 and of the associated railway line 105; and, according to the invention, at least one software module, preferably two software modules 45, 46 in particular two nearest neighborhood Kalman filters 45 and 46.

In particular, according to the embodiment illustrated in figure 1, the one or more databases comprises a first data base 61, or "catenary location database 61" and a second database 62, or "overhead line monitoring database 62", which are for example installed on board of the railway vehicle 105, and a third database 63, or "overhead line reference database 63", and a fourth database 64, or "overhead line monitoring database 64", which are for example installed on the track side, for instance in a control center 90.

For instance, the first database 61 stores predominantly data of the overhead power line 100 and of its cantilever-shaped poles 102 for locating them, such as one or more of, but not limited to, the following data: names(s) or identifier(s) of railway station(s) along the railway line 105; interstation name(s); identifiers of the tracks of the line 105; calculated identifier or ID for the cantilever-shaped poles 102; location, i.e. distance from a station, which can be calculated using data from the accelerometer 41 and using at least one of the above mentioned Kalman filters 45, 46; data provided by the gyroscope 41, such as slope, curve, and the like; upcoming neutral section along the railway line 105, in terms of distance from a cantilever pole 102 and of length of such upcoming neutral section; list of upcoming identifiers of cantilever-shaped poles 102, track change angles; initial values of stagger with respect to the list of upcoming identifiers of cantilever-shaped poles 102; distance to the list of upcoming identifiers of cantilever-shaped poles 102.

In turn, the second or "overhead line monitoring database" 62 stores predominantly data of relevant parameters for the contact wire 101, together with data relevant for localizing a position along the line 105, such as one or more of, but not limited to, the following data: names(s) or identifier(s) of the railway station(s) along the railway line 105; interstation name(s); identifiers or IDs for the cantilever-shaped poles 102; identifiers or IDs of the tracks of the line 105; location of cantilever-shaped poles 102; distance from cantilever-shaped poles 102; values for parameters of the contact wire 101 to be monitored, such as height, stagger and thickness of the contact wire 101.

As those skilled in the art would appreciate, some of the above indicated data can be inputted/updated manually in the first and/or second databases 61, 62, and some others can be calculated/updated periodically, for example via the processing unit 50.

The third or overhead line reference database 63 also stores predominantly reference data of relevant parameters for the contact wire 101, together with data relevant for localizing a position along the line 105, such as one or more of, but not limited to, the following data: names(s) or identifier(s) of railway station(s) along the railway line 105; interstation name(s); identifiers of the tracks of the line 105; identifier or ID for the cantilever-shaped poles 102; distance from cantilever-shape poles 102, reference or expected values for parameters of the contact wire 101 to be monitored, such as actual height, stagger and thickness of the contact wire 101, which can be compared with actually calculated values.

As those skilled in the art would appreciate, some of the above indicated data can be inputted/updated manually in the third database 63, and some others can be calculated/updated periodically for example via a centralized server 80 receiving data from the processing unit 50.

The fourth or overhead line monitoring database 64 stores predominantly data received from the unit 50 and related to relevant parameters for the contact wire 101, together with data relevant for localizing a position along the line 105, such as one or more of, but not limited to, the following data: names(s) or identifier(s) of railway station(s) along the railway line 105; interstation name(s); identifiers of the tracks of the line 105; identifier or ID for the cantilever-shaped poles 102; distance from cantilever-shape poles 102; calculated values for parameters of the contact wire 101 to be monitored, such as actual height, stagger and thickness of the contact wire 101, which can be compared with reference values; gradient of the contact wire 101, calculated for example by the centralized server 80.

In the control system 150 according to the present invention, the control and processing unit 50 is configured for calculating, preferably in real time:

- one or more actual values for at least one, preferably each, of the one or more parameters H, D, S of the contact wire 101 based on at least the first signals $S_{det}$ provided via the corresponding one or more sensors 1; and
- based on the second signals $S_P$ received from said one or more devices 40, the actual position $P_a$ of the railway vehicle 110 travelling along the railway line 105, at which actual position $P_a$ the actual values for the one or more parameters H, D, S of the contact wire 101 have been calculated.

According to one possible embodiment, the control and processing unit 50 is configured for calculating one or more actual values for at least one of said one or more parameters H, D, S of the contact wire 101 based also on the second signals $S_P$ provided by at least one of said one or more devices 40.

The control and processing unit 50 can be of concentrated or distributed type, it can be preferably mounted completely on board of the railway vehicle 110, and it can constituted by or comprise any suitable processor-based device, e.g. a processor of a type commercially available and suitably programmed and provided to the extent necessary with circuitry, in order to carry out the functionalities it is devised to perform within the frame of the present invention.

In particular, in one possible embodiment, the control system 150 comprises an elaboration unit or module 70, comprised in or operatively associated with the control and processing unit 50, which is arranged to compare the actual values calculated by the control and processing unit 50 for each of the one or more parameters H, D, S with corresponding thresholds and to generate a corresponding alert signal $S_{al}$ if a calculated value of the one or more parameters 101 violates the respective threshold.

In the embodiment illustrated in figure 1, the unit 70 is represented as being part of a centralized server 80 located in a control center 90, remote from the control and processing unit 50, and is operatively associated with the control and processing unit 50. However, as those skilled in the art may easily appreciate, the elaboration unit 70 can be part of the unit 50, it can be a separate unit, and it can be positioned on board of the railway vehicle 110.

Depending on the circumstances, for example on the type and/or severity of the defective condition identified, the alert signal $S_{al}$ generated by the unit 70 can be an informing alert, a signal triggering an alarm for example for maintenance, or even a signal triggering an immediate interruption of power supply, and it can be output for example towards a graphical user interface 71, positioned on-board of the railway vehicle 110 itself, and/or to a graphical user interface 72 positioned in the remote control center 90, and/or to a fault predictive server 95.

Further, the graphical user interface 71, or another one, such as the graphical user interface 72, can be used for displaying at least the actual values calculated for the one or more parameters H, D, S of the contact wire 101.

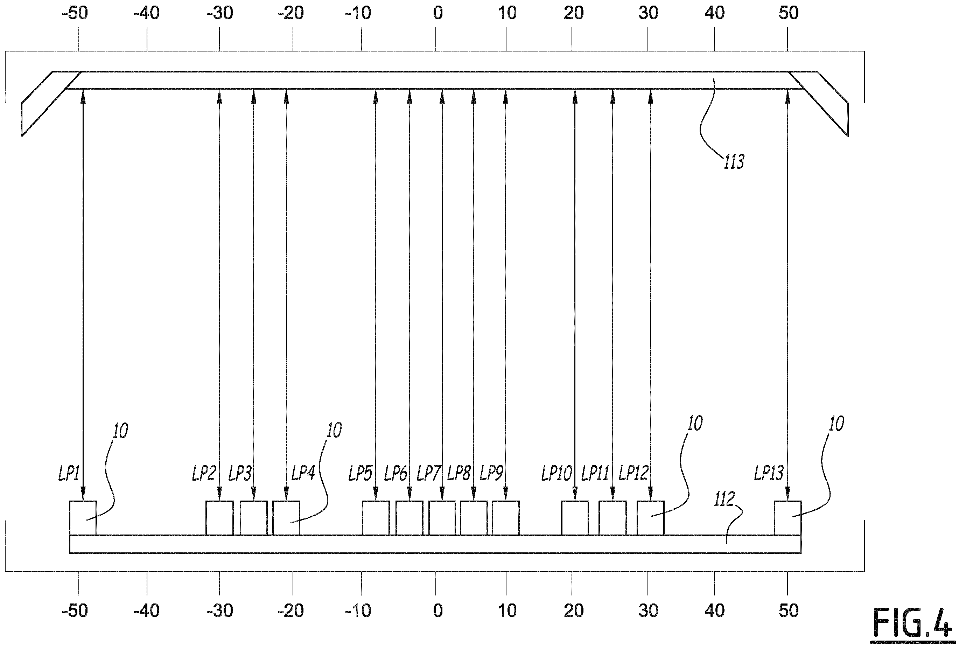

According to a possible embodiment of the control system 150, the one or more sensors 1 comprise one or more proximity sensors, schematically illustrated in figure 4 by the reference 10, which are configured to provide signals $S_{det}$ indicative of the actual distance $H_a$ of the contact wire 101 from a reference position, e.g. the height of the contact wire 101 from the top surface of the rails of the line 105.

In particular, the one or more proximity sensors 10 comprise a plurality of laser sensors 10 which are mounted on the external top surface 112 of the roof of the railway vehicle 110.

According to the exemplary embodiment illustrated in figure 4, there is provided a set of laser sensors 10, for instance a set of thirteen lasers sensor 10, which are distributed on the top surface 112, below and under the span of the contact head 113 of the pantograph 111.

In particular, since the vertical movement of the pantograph 111 is substantially stable around the center of its head 113, the sensors 10 are divided in groups and more sensors 10 are grouped and mounted around such centre. Further, since the pantograph 111 may undergo slight tilt at its edges, at least one sensor 10 is mounted at a position corresponding to each end of the contact head 113.

The height H of the contact wire 101 from the rail level can be calculated as the sum of the height of the vehicle, i.e. the distance "$h_b$" of the top surface 112 from the top surface of the rail, plus the height of the contact wire 101 from the top surface 112.

The sensors 10 provide the measurements to the control and processing unit 50 for further processing; for instance, the control and processing unit 50 fuses the measurements from all the sensors 10 using a weighted average based on the distance of each sensor 10 from the center of the contact head 113 of the pantograph, wherein measurements coming from longer distances from the center have less weight, while more weight is given to measurements around the center.

The weighted average height value "$h_p$" of the contact wire 101 from the top surface 112, is for instance calculated by the following exemplary formula:

$$h_p = \frac{Lp1 + 3(LP2 + Lp3 + Lp4) + 5(LP5 + LP6 + Lp7 + Lp8 + Lp9) + 3(Lp10 + Lp11 + Lp12) + LP13}{1 + 3*3 + 5*5 + 3*3 + 1 \ (=45)}$$

where LP1 to LP13 are the height measurements calulcated via the laser proximity sensors 10.

As previously mentioned, the measurements from the at least one of the one or more devices 40 can be used also for calculating the actual values of a parameter of the contact wire 101; in particular, in this case the signals provided by the three-axis gyroscope 41 and by the thre-axis accelerometer 42 are used by the control and processing unit 50 for calculating the vertical movement "$h_g$" of the vehicle 110 along a vertical axis, and then correcting the actual value of the height "$H_a$" of the contact wire 101 from the top surface of the rails.

Accordingly, the actual height "$H_a$" of contact wire from rail level can be expressed as:

$$H_a = (h_p + h_b) - h_g$$

According to the invention, the one or more sensors 1 comprise at least an optical transmitter and an associated optical receiver which are mutually arranged and configured to provide to the unit 50 signals $S_{det}$ indicative of an actual dimensional parameter $D_a$ of the contact wire 101.

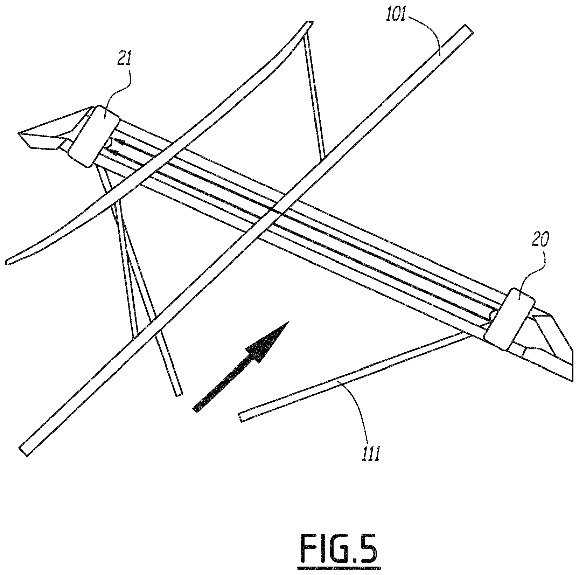

According to the invention, as schematically shown in figure 5, the at least an optical transmitter and an associated optical receiver comprise a pair of laser-based transmitter and associated receiver, schematically indicated by the corresponding reference numbers 20 and 21.

The laser beam transmitter 20 is for instance placed at one end of the contact head 113 of the pantograph 111, and the laser beam receiver 21 at the opposite end.

In operations, the laser beam transmitted from the transmitter 20 will be completely received by the receiver 21 if no objects are present in between; since the pantograph 111 is continuously in contact with the contact wire 101, a part of the laser beam transmitted will not be received at the receiver 21, and when the thickness of the contact wire 101 reduces, there will be an increase in the amount of laser beam received at the receiver 21.

As a matter of fact, corresponding differing signals will be continuously transmitted to the unit 50 and the "missing beam" is measured by the unit 50 as the actual thickness of the contact wire 101, thus allowing to calculate the actual diameter or ray thereof.

According to the invention, the control system 150 comprise at least a first optical sensor 31 and a spaced apart second optical sensor 32 which are configured and mutually arranged to provide signals $S_{det}$ indicative of an actual stagger $S_a$ of the contact wire 101 with respect to a reference position.

As known in the field, with the definition of stagger it is hereby meant the horizontal motion of the contact wire 101 over the pantograph 111 when the vehicle 110 is in motion. The stagger of the contact wire 101 is the result of push up and pull up of contact wire 101 from the center between two rails of the railway line 105. This is specifically done to reduce the friction between the contact wire 101 and the pantograph 111; failure to maintain a specified stagger, for example having a stagger beyond a given limit would lead to damaging the pantograph 111 and/or the overhead line 100 itself.

According to the invention, the at least a first optical sensor 31 and second optical sensor 32 comprise a first array of laser sensors 31 and a corresponding second array of laser sensors 32 spaced apart from the first array of laser sensors 31.

As schematically illustrated in figure 3, the two sets of laser sensor arrays 31 and 32 are mounted on the top surface 112 of the vehicle 110, preferably at least slightly away from the pantograph 111 so as to avoid obstruction. Since the actual stagger value varies, the light emitted by the first array of laser sensors 31 and reflected by the contact wire 101 also varies when compared to the light emitted by the second array of laser sensors 32 and reflected by the contact wire 101..

The variations of light received by the sensors 32 is continuously transmitted to the unit 50 which then calculates the actual stagger value $S_a$.

Also in this case, the measurements from the at least one of the one or more devices 40 can be used also for calculating the actual values of the stagger of the contact wire 101; in particular, the signals provided by the three-axis gyroscope 41 and by the three-axis accelerometer 42 are used by the control and processing unit 50 for calculating the lateral movements of the vehicle 110 along an axis trasversal to the direction of travelling, and the values of such lateral movements are taken into consideration by the unit 50 for correcting the actual value of the stagger "$S_a$".

Since it is possible to have clutters or false signals due to other wires, parallel wires, parallel catenaries, the at least one software module 45, in particular the first nearest neighborhood Kalman filter 45 is configured to carry out a validation check for confirming the correctness of an identified portion of a contact wire 101, wherein the validation check is based on a correlation between the actual stagger value $S_a$ calculated by the control and processing unit 50 for the identified portion and a predicted stagger value $S_P$ pre-calculated by the first software module 45 for the identified portion.

In particular, by using for instance the stagger value of the contact wire which is reset at each cantilever-shaped pole 102, and the identification and location of a forthcoming pole 102 extracted from the first database 61, it is possible to calculate the slope of the stagger, namely the ratio between total stagger and distance, at each desired location, i.e. a distance from a previously identified pole 102; for example, such data can be calculated at desired intervals, e.g. every ten meters.

For instance, by using a constant acceleration model, which can be used to propagate the various states from one instant to another instance, at each location, the first nearest neighborhood Kalman filter 45 calculates an expected stagger value for the forthcoming portion of contact wire 101 at a specific location; then, after the railway vehicle has presumably reached the same forthcoming portion, the first Kalman filter 45 correlates the actual stagger value calculated by the control and processing unit 50 for the relevant portion of the contact wire with the predicted stagger value at the relevant location. For instance, the first near neighbourhood Kalman filter 45 when running the validation check draws a circular validation gate region based on predicted location as the center and fixed variance as the radius. If the stagger value calculated using the signals provided by the first and second array of laser sensors 31 and 32 falls outside the validation gate, then the calculation is considered invalid and it is rejected as a false signal. If the measurement lies inside the validation gate and closest towards the center of the radius (in case of more than one measurement), it is treated as the valid stagger data. In this way, the stagger is confirmed without ambiguity for the contact wire 101 at each location. The result of the validity check is made available to the control and processing unit 50.

According to an embodiment, the localization of the position of the railway vehicle 110 along the railway line 105, from which it is possible to derive the portion of the contact wire for which the actual values of the relevant parameters have been calculated, is performed using the two arrays of sensors 31 and 32. Conveniently, the first array of laser sensors 31 and the corresponding second array of laser sensors 32, which are spaced apart from the first array of laser sensors 31, are arranged to provide to the control and processing unit 50, signals $S_{det}$ suitable for identifying the presence of each cantilever-shaped pole 102 while the railway vehicle 110 is travelling along the railway line 105.

In particular, when the cantilever part of each pole 102 arrives above the array of laser sensors 31 and 32, the receiving array of laser sensors 31 and 32 receives the maximum light emitted and the corresponding signals provided to the unit 50 allows localizing the presence of a relevant pole 102.

According to an embodiment, the location in between two cantilever-shaped poles 102 can be measured using the second software module 46, namely the second nearest neighbourhood Kalman filter 46, which is used in particular to confirm the correctness of the signals received, and in particular the correctness of the presence of a localized pole 102, and therefore to exclude clutters or false signals due to other parallel catenaries and related poles.

In particular, the second nearest neighborhood Kalman filter 46, is configured to carry out a validation check based on a correlation between the localized position calculated by the control and processing unit 50 for a relevant pole 102 and a predicted expected position pre-calculated by the second software module 46 for the same relevant pole 102.

For instance, by using for instance as inputs the distance from a station, which is reset at each pole 102, the values of speed/acceleration of the railway vehicle 105 provided by the accelerometer 42, a constant acceleration model, which can be used to propagate the various states from one instant to another instant, and data from the first catenary location database 61, the second nearest neighborhood Kalman filter 46 calculates an expected location for an expected forthcoming pole 102; then, it correlates the actual position calculated by the control and processing unit 50 for presumably the same forthcoming pole 102 with the previously predicted expected location.

For instance, the second Kalman filter 46, when running the validation check, draws a circular validation gate region based on the predicted location as the center and fixed variance as the radius. If the location of the specific pole 102, identified via the signals provided by the arrays of sensors 31 and 32 to the unit 50, falls outside the validation gate, then it is rejected as a false signal. If the measurement lies inside the validation gate and closest towards the center of the radius (in case of more than one measurement), it is treated as the correct pole 102. In this way, the correct presence of each supporting cantilever-shaped pole 102 is identified without ambiguity for localizing purposes. For further confirming or better refining the identification or ID of a pole 102, the data from the gyroscope 41, such as slope, curves, et cetera, and/or for the neutral section(s) from the first catenary location database 61 can be used. The information related to the station(s) name (s), to inter-station(s) name(s), to track ID, to the first pole 102 ID upcoming from a station, is initialized with the help of manual input or automatic initialization by processing for example Wi-Fi signals when the vehicle 110 stops at the station. This initialization is preferably required at each station as the vehicle 110 may change the direction of travel at each station. At each pole 102, the location data from the first catenary location database 61 is used for tagging the parameters of the contact wire 101, and the estimated distance information calculated by the second Kalman filter 46 is used whenever the measurements are made in between two cantilevers.

According to a possible embodiment, the previously mentioned server 95 is configured to elaborate, based on the predefined reference values H, D, S and on those calculated for the one or more parameters of the contact wire 101, a preventive maintenance schedule for the contact wire 101.

In particular, the server 95 is suitable to receive the raw data provided via the one or more sensors 1, and/or elaborated by the unit 50, and communicated via the communication device 85, e.g. a wireless transmitter. The server 95 is configured for processing the data received along with the related time stamp, and for defining a maintenance intervention or a predictive maintenance schedule for the contact wire 101 and/or any part thereof.

According to an embodiment, the server 95 is an Artificial Intelligence (AI) based and properly trained server which analyses the values of actual parameters received, the reference values for the contact wire together with the respective location, and the minimum and maximum allowable values for such parameters together with related location data. In particular the predictive maintenance schedule will suggest operators, the future date on which the contact wire 101 needs to be changed, the location of cantilevers which needs height or stagger correction for the contact wire 101, et cetera.

For example, the AI-based server 95 can be trained using parameter data calculated over a certain interval of time, the maintenance scheduled frequency and the type of corrective actions performed and can use the deep neural network to model the relationship between inputs, such as contact wire reference parameters, allowable limits, and measured parameters such as height, stagger, diameter, along with their location, and outputs such as the number of days in which preventive maintenance has to be executed from the measurement day, and list of action numbers performed, for example, 1) - correction of height, 2) - correction of stagger, 3) - contact wire replacement, et cetera.

Once training is completed, then real-time values for the relevant parameters with location information can be fed to the server 95 for example by the centralized server 80. The server 95 also gets the input of reference contact wire parameters and allowable minimum and maximum contact wire parameters with location data from the third databse 63. Based on the trained model, the server 95 generates the maintenance schedule i.e. the number of days by which the correction/replacement has to be executed along with the associated preventive action to be performed on a periodic basis, for example weekly. This information can be stored in the overhead power line monitoring database 64 and can be viewed for example on the graphical user interface 72.

As above indicated, figure 2 illustrates schematically a method 200 for monitoring an overhead power supply line 100 installed along an associated railway line 105, and of a contact wire 101 thereof, characterized in that it comprises at least the following steps:

- 205: providing, by means of one or more sensors 1 which are suitable to be mounted on board of a railway vehicle 100, first signals $S_{det}$ indicative of one or more corresponding parameters H, D, S of said contact wire 101 while the railway vehicle 110 is travelling along the railway line 105;
- 210: providing, by means of one or more devices 40, second signals $S_P$ suitable for calculating a position of the railway vehicle 110 along the railway line 105. According to an embodiment such one or more devices 40 comprise at least one multi-axis inertial sensor 41 suitable to be mounted on-board of the railway vehicle 110;
- 215: calculating, preferably in real time, by means of a control and processing unit 50, one or more actual values for said one or more parameters H, D, S of the contact wire 101 based on at least the first signals $S_{det}$ provided via said one or more sensors 1, and, based on said second signals $S_P$ received from said one or more devices 40, the actual position $P_a$ of the railway vehicle 110 along the railway line 105 at which said actual values for said one or more parameters H, D, S of the contact wire 101 have been calculated.

According to an embodiment, the step 215 of calculating comprises calculating the one or more actual values for at least one of said one or more parameters H, D, S of the contact wire 101 based also on second signals $S_P$ provided by at least one of the devices 40, as previously described in connection with the control system 150.

According to an embodiment, the method 200 further comprises the steps of:

- 220: comparing the actual values calculated by the control and processing unit 50 for each of the one or more parameters H, D, S with corresponding thresholds; and
- 230: generating a corresponding alert signal if a calculated value for the one or more parameters violates a respective threshold.

According to possible embodiments, the step 215 of calculating, preferably in real time, comprises:

- calculating the actual distance $H_a$ of the contact wire 101 from a reference position; and according to the invention it comprises:

  - calculating an actual dimensional parameter D of the contact wire 101; and

- calculating an actual stagger $S_a$ of the contact wire 101.

According to the invention, the method 200 comprises, after the step 215 of calculating, the steps of:

- 221: predicting a stagger value $S_P$ for a forthcoming portion of the contact wire 101; and
- 222: carrying out a validation check based on a correlation between the predicted stagger value $S_P$ and the actual stagger value $S_a$ calculated by the control and processing unit 50 based on the signals $S_{det}$ indicative of an actual stagger $S_a$ of the contact wire 101 for the forthcoming portion;
- 223: validating or discarding the calculated actual stagger value $S_a$ based on the result of the validation check carried out at step 222.

In one possible embodiment, the method 200 comprises, for example after said step 215 of calculating, the steps of:

- 224: predicting the position of a forthcoming pole 102 along the railway line 105;
- 225: carrying out a validation check based on a correlation between the predicted position for said forthcoming pole 102 and the actual position calculated by the control and processing unit 50 for said forthcoming pole based on the signals $S_{det}$ provided via at least a first and a second arrays of sensors 31, 32;
- 226: confirming or discarding the identified presence of a pole 102 based on the result of the validation check carried out at step 225.

Conveniently, the method 200 comprises the step 240 of displaying, on at least one graphical user interface 71, at least values calculated for said one or more parameters H, D, S of the contact wire 101.

According to yet an embodiment, the method 200 further comprises a step 250 of elaborating, by means of the predictive maintenance server 95, a preventive maintenance schedule for the contact wire 101 based on predefined reference values and calculated values H, D, S for the one or more parameters of the contact wire 101.

Hence, it is evident from the foregoing description and appended claims that the control system 150, the method 200 and the related railway vehicle 110 according to the present invention, achieve the intended aim and objects, since they allow monitoring and detecting, timely and precisely, the presence of a potentially defective part of any part of a contact wire used for powering railway vehicles travelling along a railway line.

In particular, depending on the applications and desired results, it is possible to combine two or more embodiments previously described thus monitoring at the same time different types of defective conditions related for example to horizontal and vertical displacements of the contact wire 101, or to insufficient thickness.

These results are achieved according to a solution very flexible that can be implemented by using any type of railway vehicle while such vehicle is performing its normal and regular duty service, thus avoiding the use of special vehicles designed specifically for maintenance, or to cause interruption of traffic for monitoring purposes. Indeed, any railway vehicle is suitable to be easily equipped with the sensors 1, the devices 40 and the related one or more databases 61-62, et cetera.

The system 150, method 200 and railway vehicle 110 thus conceived are susceptible of modifications and variations, all of which are within the scope of the inventive concept as defined by the appended claims; for example, some parts of the control system 150 may reside on the same electronic unit, or they can even be realized as subparts of a same component or circuit of an electronic unit, or they can be placed remotely from each other and in operative communication there between. For instance, there could be used only one database incorporating the four databases 61-64 previously described, or there could a different number of databases with respect to those described. The localization of the position of the vehicles along the railway line can be carried using other type of devices other than the arrays of sensors 31 and 32 previously described. As those skilled in the art would appreciate, some steps of the described method 200 can be executed in parallel to each other, or anyhow in any other suitable sequence different from the one described and illustrated with respect to figure 2, provided that such different sequence is suitable to achieve the scope each step/substep and the method as a whole are meant for, as defined by the appended claims.

All the details may furthermore be replaced with technically equivalent elements.

**Claims**

1. A control system (150) for monitoring a contact wire (101) of an overhead power supplying line (100) installed along an associated railway line (105), comprising at least:

- a control and processing unit (50);

- one or more sensors (1) which are suitable to be mounted on board of a railway vehicle (110) and are adapted to provide to the control and processing unit (50) first signals ($S_{det}$) indicative of one or more corresponding parameters (H, D, S) of said contact wire (101) while the railway vehicle (110) is travelling along the railway line (105);
- one or more devices (40) which are arranged to provide to the control and processing unit (50) second signals ($S_P$) suitable for calculating a position (P) of the railway vehicle (110) along the railway line (105);

wherein said control and processing unit (50) is configured for calculating:

- based on at least the first signals ($S_{det}$) provided via said one or more sensors (1), one or more actual values for said one or more parameters (H, D, S) of the contact wire (101); and
- based on said second signals ($S_P$) received from said one or more devices (40), the actual position ($P_a$) of the railway vehicle (110) along the railway line (105) at which said actual values for said one or more parameters (H, D, S) of the contact wire (101) have been calculated;

wherein said one or more sensors (1) comprise at least:

- an optical transmitter (20) and an associated optical receiver (21) mutually arranged to provide signals ($S_{det}$) indicative of an actual dimensional parameter ($D_a$) of the contact wire (101), said optical transmitter (20) and associated optical receiver (21) comprising a pair of laser-based transmitter and associated receiver; and
- a first optical sensor (31) and a second optical sensor (32) mutually arranged to provide signals ($S_{det}$) indicative of an actual stagger ($S_a$) of the contact wire (101) with respect to a reference position,

**characterised in that** said first optical sensor (31) and second optical sensor (32) comprising a first array of laser sensors (31) and a corresponding second array of laser sensors (32) spaced apart from the first array of laser sensors (31), and **in that** the control system (150) further comprises a first software module (45) configured to carry out a validation check for confirming the correctness of an identified portion of a contact wire (101), wherein said validation check is based on a correlation between the actual stagger value ($S_a$) calculated by the control and processing unit (50) for the identified portion and a predicted stagger value ($S_P$) pre-calculated by the first software module (45) for said identified portion.

2. A control system (150) according to claim 1, wherein said control and processing unit (50) is configured for calculating one or more actual values for at least one of said one or more parameters (H, D, S) of the contact wire (101) based also on second signals ($S_P$) provided by at least one of said one or more devices (40).

3. A control system (150) according to claim 1 or 2, wherein it comprises an elaboration unit (70) which is arranged to compare the actual values calculated by the control and processing unit (50) for each of the one or more parameters (H, D, S) with corresponding thresholds and to generate a corresponding alert signal ($S_{al}$) if a calculated actual value of the one or more parameters (101) violates the respective threshold.

4. A control system (150) according to any of claims 1 to 3, wherein said one or more sensors (1) further comprise one or more proximity sensors (10) configured to provide signals ($S_{det}$) indicative of the actual distance ($H_a$) of the contact wire (101) from a reference position.

5. A control system (100) according to claim 4, wherein said one or more proximity sensors (10) comprise a plurality of laser sensors (10).

6. A control system (150) according to claim 1, wherein said overhead power supplying line (100) comprises a plurality of cantilever-shaped poles (102) positioned along the railway line (105), and wherein said first array of laser sensors (31) and said corresponding second array of laser sensors (32) are arranged to provide the control and processing unit (50) with signals ($S_{det}$) suitable for localizing the position of an identified pole (102) while the railway vehicle (110) is travelling along the railway line (105), and wherein the system (150) further comprises a second software module (46) configured to carry out a validation check for confirming the correctness of a localized pole (102), said validation check being based on a correlation between the localized position calculated by the control and processing unit (50) and a predicted position pre-calculated by the second software module (46) for said localized pole (102).

7. A control system (150) according to any of claims 1 to 6, wherein said one or more devices (40) comprise at least one multi-axis inertial sensor (41) suitable to be mounted on-board of the railway vehicle (110), said at least one multi-axis inertial sensor comprises at least one of a multi-axis gyroscope (41) and/or a multi-axis accelerometer (42).

**8.** A control system (150) according to any one of the preceding claims, wherein it comprises a server (95) which is configured to elaborate, based on predefined reference values and actually calculated values ($H_a$, $D_a$, $S_a$) for said one or more parameters (H, D, S), a preventive maintenance schedule for the contact wire (101).

**9.** A railway vehicle (110), **characterized in that** it comprises, or it is adapted to interact with, a control system (150) according to any one of claims 1 to 8.

**10.** A method (200) for monitoring a contact wire (101) of an overhead power supplying line (100) installed along an associated railway line (105), **characterized in that** it comprises at least the following steps:

- (205): providing, by means of one or more sensors (1) which are suitable to be mounted on board of a railway vehicle (100), first signals ($S_{det}$) indicative of one or more corresponding parameters (H, D, S) of said contact wire (101) while the railway vehicle (110) is travelling along the railway line (105), wherein said one or more sensors (1) comprise at least:

- an optical transmitter (20) and an associated optical receiver (21) mutually arranged to provide signals ($S_{det}$) indicative of an actual dimensional parameter ($D_a$) of the contact wire (101), said optical transmitter (20) and associated optical receiver (21) comprising a pair of laser-based transmitter and associated receiver; and
- a first optical sensor (31) and a second optical sensor (32) mutually arranged to provide signals ($S_{det}$) indicative of an actual stagger ($S_a$) of the contact wire (101) with respect to a reference position, said a first optical sensor (31) and a second optical sensor (32) comprising a first array of laser sensors (31) and a corresponding second array of laser sensors (32) spaced apart from the first array of laser sensors (31);

- (210): providing, by means of one or more devices (40), second signals ($S_P$) suitable for calculating a position (P) of the railway vehicle (1) along the railway line (10);
- (215): calculating, by means of a control and processing unit (50):

- one or more actual values for said dimensional parameter ($D_a$) and said stagger ($S_a$) of the contact wire (101), based on at least the first signals ($S_{det}$) provided by said optical transmitter (20) and an associated optical receiver (21) and by said first optical sensor (31) and second optical sensor (32), respectively; and,
- the actual position ($P_a$) of the railway vehicle (105) along the railway line (105) at which said actual values for said dimensional parameter ($D_a$) and said stagger ($S_a$) of the contact wire (101) have been calculated, based on said second signals ($S_P$) received from said one or more devices (40);

and **in that** the method (200) further comprises, after said step (215) of calculating, the steps of:

- (221): predicting a stagger value ($S_P$) for a forthcoming portion of the contact wire (101); and
- (222): carrying out, by means of a first software module (45), a validation check based on a correlation between the predicted stagger value ($S_P$) and the actual stagger value ($S_a$) calculated by the control and processing unit (50) based on the first signals ($S_{det}$) indicative of an actual stagger ($S_a$) of the contact wire (101) for the forthcoming portion provided by said first optical sensor (31) and second optical sensor (32);
- (223): validating or discarding the calculated actual stagger value ($S_a$) based on the result of the validation check carried out at step (222).


**Patentansprüche**

**1.** Steuersystem (150) zum Überwachen eines Fahrdrahts (101) einer Oberleitung (100), die entlang einer zugehörigen Eisenbahnstrecke (105) installiert ist, umfassend mindestens:

- eine Steuer- und Verarbeitungseinheit (50);
- einen oder mehrere Sensoren (1), die geeignet sind, an Bord eines Schienenfahrzeugs (110) montiert zu werden, und die so beschaffen sind, dass sie der Steuer- und Verarbeitungseinheit (50) erste Signale ($S_{det}$) liefern, die einen oder mehrere entsprechende Parameter (H, D, S) des Fahrdrahts (101) anzeigen, während das Schienenfahrzeug (110) entlang der Eisenbahnstrecke (105) fährt;

- eine oder mehrere Vorrichtungen (40), die so eingerichtet sind, dass sie der Steuer- und Verarbeitungseinheit (50) zweite Signale ($S_P$) liefern, die zum Berechnen einer Position (P) des Schienenfahrzeugs (110) entlang der Bahnstrecke (105) geeignet sind;

wobei die Steuer- und Verarbeitungseinheit (50) so konfiguriert ist, dass sie Folgendes berechnet:

- auf der Grundlage mindestens der ersten Signale ($S_{det}$), die über den einen oder die mehreren Sensoren (1) bereitgestellt werden, einen oder mehrere Istwerte für den einen oder die mehreren Parameter (H, D, S) des Fahrdrahts (101); und
- auf der Grundlage der zweiten Signale ($S_P$), die von der einen oder den mehreren Vorrichtungen (40) empfangen werden, die tatsächliche Position ($P_a$) des Schienenfahrzeugs (110) entlang der Eisenbahnstrecke (105), an der die Ist-Werte für den einen oder die mehreren Parameter (H, D, S) des Fahrdrahts (101) berechnet wurden;

wobei der eine oder die mehreren Sensoren (1) mindestens Folgendes umfassen:

- einen optischen Sender (20) und einen zugehörigen optischen Empfänger (21), die gegenseitig so angeordnet sind, dass sie Signale ($S_{det}$) liefern, die einen tatsächlichen Dimensionsparameter ($D_a$) des Fahrdrahts (101) anzeigen, wobei der optische Sender (20) und der zugehörige optische Empfänger (21) ein Paar aus einem laserbasierten Sender und einem zugehörigen Empfänger umfassen; und
- einen ersten optischen Sensor (31) und einen zweiten optischen Sensor (32), die gegenseitig so angeordnet sind, dass sie Signale ($S_{det}$) liefern, die einen tatsächlichen Versatz ($S_a$) des Fahrdrahts (101) in Bezug auf eine Referenzposition anzeigen, **dadurch gekennzeichnet, dass** der erste optische Sensor (31) und der zweite optische Sensor (32) eine erste Anordnung von Lasersensoren (31) und eine entsprechende zweite Anordnung von Lasersensoren (32) umfassen, die von der ersten Anordnung von Lasersensoren (31) beabstandet sind, und dass das Steuersystem (150) ferner ein erstes Softwaremodul (45) umfasst, das so konfiguriert ist, dass es eine Validierungsprüfung zur Bestätigung der Korrektheit eines identifizierten Abschnitts eines Fahrdrahts (101) durchführt, wobei die Validierungsprüfung auf einer Korrelation zwischen dem tatsächlichen Versatzwert ($S_a$), der von der Steuer- und Verarbeitungseinheit (50) für den identifizierten Abschnitt berechnet wird, und einem vorhergesagten Versatzwert ($S_P$), der von dem ersten Softwaremodul (45) für den identifizierten Abschnitt vorberechnet wird, basiert.

2. Steuersystem (150) nach Anspruch 1, wobei die Steuer- und Verarbeitungseinheit (50) so konfiguriert ist, dass sie einen oder mehrere tatsächliche Werte für mindestens einen der einen oder mehreren Parameter (H, D, S) des Fahrdrahts (101) auch auf der Grundlage von zweiten Signalen ($S_P$) berechnet, die von mindestens einer der einen oder mehreren Vorrichtungen (40) bereitgestellt werden.

3. Steuersystem (150) nach Anspruch 1 oder 2, wobei es eine Ausarbeitungseinheit (70) umfasst, die so eingerichtet ist, dass sie die von der Steuer- und Verarbeitungseinheit (50) für jeden der einen oder mehreren Parameter (H, D, S) berechneten Ist-Werte mit entsprechenden Schwellenwerten vergleicht und ein entsprechendes Alarmsignal ($S_{al}$) erzeugt, wenn ein berechneter Ist-Wert des einen oder der mehreren Parameter (101) den jeweiligen Schwellenwert über- oder unterschreitet.

4. Steuersystem (150) nach einem der Ansprüche 1 bis 3, wobei der eine oder die mehreren Sensoren (1) ferner einen oder mehrere Näherungssensoren (10) umfassen, die so konfiguriert sind, dass sie Signale ($S_{det}$) liefern, die den tatsächlichen Abstand ($H_a$) des Fahrdrahts (101) von einer Referenzposition anzeigen.

5. Steuersystem (100) nach Anspruch 4, wobei der eine oder die mehreren Näherungssensoren (10) eine Vielzahl von Lasersensoren (10) umfassen.

6. Steuerungssystem (150) nach Anspruch 1, wobei die Oberleitung (100) eine Vielzahl von freitragenden Masten (102) umfasst, die entlang der Eisenbahnstrecke (105) positioniert sind, und wobei die erste Anordnung von Lasersensoren (31) und die entsprechende zweite Anordnung von Lasersensoren (32) so angeordnet sind, dass sie die Steuer- und Verarbeitungseinheit (50) mit Signalen ($S_{det}$) versorgen, die geeignet sind, die Position eines identifizierten Mastes (102) zu lokalisieren, während das Schienenfahrzeug (110) entlang der Eisenbahnstrecke (105) fährt, und wobei das System (150) ferner ein zweites Softwaremodul (46) umfasst, das so konfiguriert ist, dass es eine Validierungsprüfung zur Bestätigung der Korrektheit eines lokalisierten Mastes (102) durchführt, wobei die Validierungsprüfung auf einer Korrelation zwischen der lokalisierten Position, die von der Steuer- und Verarbeitungseinheit (50) berechnet wird, und einer vorhergesagten Position, die von dem zweiten Softwaremodul (46) für den lokalisierten Mast (102) vorberechnet wird, basiert.

7. Steuersystem (150) nach einem der Ansprüche 1 bis 6, wobei die eine oder die mehreren Vorrichtungen (40) mindestens einen mehrachsigen Trägheitssensor (41) umfassen, der geeignet ist, an Bord des Schienenfahrzeugs (110) angebracht zu werden, wobei der mindestens eine mehrachsige Trägheitssensor mindestens eines von einem mehrachsigen Gyroskop (41) und/oder einem mehrachsigen Beschleunigungsmesser (42) umfasst.

8. Steuersystem (150) nach einem der vorhergehenden Ansprüche, wobei es einen Server (95) umfasst, der so konfiguriert ist, dass er auf der Grundlage von vordefinierten Referenzwerten und berechneten Ist-Werten ($H_a$, $D_a$, $S_a$) für den einen oder die mehreren Parameter (H, D, S) einen Plan für die vorbeugende Wartung des Fahrdrahts (101) erstellt.

9. Schienenfahrzeug (110), **dadurch gekennzeichnet, dass** es ein Steuersystem (150) nach einem der Ansprüche 1 bis 8 umfasst oder mit einem solchen zusammenwirken kann.

10. Verfahren (200) zum Überwachen eines Fahrdrahts (101) einer Oberleitung (100), die entlang einer zugehörigen Eisenbahnstrecke (105) installiert ist, **dadurch gekennzeichnet, dass** es mindestens die folgenden Schritte umfasst:

   - (205): Bereitstellen, mittels eines oder mehrerer Sensoren (1), die geeignet sind, an Bord eines Schienenfahrzeugs (100) montiert zu werden, erster Signale ($S_{det}$), die einen oder mehrere entsprechende Parameter (H, D, S) des Fahrdrahts (101) anzeigen, während das Schienenfahrzeug (110) entlang der Eisenbahnstrecke (105) fährt, wobei der eine oder die mehreren Sensoren (1) mindestens Folgendes umfassen:

      - einen optischen Sender (20) und einen zugehörigen optischen Empfänger (21), die gegenseitig so angeordnet sind, dass sie Signale ($S_{det}$) liefern, die einen tatsächlichen Dimensionsparameter ($D_a$) des Fahrdrahts (101) anzeigen, wobei der optische Sender (20) und der zugehörige optische Empfänger (21) ein Paar aus einem laserbasierten Sender und einem zugehörigen Empfänger umfassen; und
      - einen ersten optischen Sensor (31) und einen zweiten optischen Sensor (32), die gegenseitig so angeordnet sind, dass sie Signale ($S_{det}$) liefern, die einen tatsächlichen Versatz ($S_a$) des Fahrdrahts (101) in Bezug auf eine Referenzposition anzeigen, wobei der erste optische Sensor (31) und der zweite optische Sensor (32) eine erste Anordnung von Lasersensoren (31) und eine entsprechende zweite Anordnung von Lasersensoren (32) umfassen, die von der ersten Anordnung von Lasersensoren (31) beabstandet sind;

   - (210): Bereitstellen von zweiten Signalen ($S_P$) mittels einer oder mehrerer Vorrichtungen (40), die geeignet sind, eine Position (P) des Schienenfahrzeugs (1) entlang der Eisenbahnstrecke (10) zu berechnen;
   - (215): Berechnen mithilfe einer Steuer- und Verarbeitungseinheit (50):

      - einen oder mehrere Ist-Werte für den Dimensionsparameter ($D_a$) und den Versatz ($S_a$) des Fahrdrahts (101), basierend auf mindestens den ersten Signalen ($S_{det}$), die von dem optischen Sender (20) und einem zugehörigen optischen Empfänger (21) bzw. von dem ersten optischen Sensor (31) und dem zweiten optischen Sensor (32) geliefert werden; und,
      - die tatsächliche Position ($P_a$) des Schienenfahrzeugs (105) entlang der Eisenbahnstrecke (105), an der die Ist-Werte für den Dimensionsparameter ($D_a$) und den Versatz ($S_a$) des Fahrdrahts (101) auf der Grundlage der von der einen oder den mehreren Vorrichtungen (40) empfangenen zweiten Signale ($S_P$) berechnet wurden;

   und **dadurch gekennzeichnet, dass** das Verfahren (200) nach dem Schritt (215) des Berechnens außerdem die folgenden Schritte umfasst:

      - (221): Vorhersagen eines Versatzwerts ($S_P$) für einen bevorstehenden Abschnitt des Fahrdrahts (101); und
      - (222): Ausführen einer Validierungsprüfung mittels eines ersten Softwaremoduls (45) auf der Grundlage einer Korrelation zwischen dem vorhergesagten Versatzwert ($S_P$) und dem tatsächlichen Versatzwert ($S_a$), der von der Steuer- und Verarbeitungseinheit (50) auf der Grundlage der ersten Signale ($S_{det}$) berechnet wird, die einen tatsächlichen Versatz ($S_a$) des Fahrdrahts (101) für den bevorstehenden Abschnitt anzeigen, der von dem ersten optischen Sensor (31) und dem zweiten optischen Sensor (32) bereitgestellt wird;
      - (223): Validieren oder Verwerfen des berechneten tatsächlichen Versatzwerts ($S_a$) auf der Grundlage des Ergebnisses der in Schritt (222) durchgeführten Validierungsprüfung.

**Revendications**

1. Système de commande (150) pour la surveillance d'un fil de contact (101) d'une ligne aérienne d'alimentation électrique (100) installée le long d'une ligne ferroviaire (105) associée, comprenant au moins :

   - une unité de commande et de traitement (50) ;
   - un ou plusieurs capteurs (1) qui sont appropriés à être montés à bord d'un véhicule ferroviaire (110) et sont adaptés pour fournir à l'unité de commande et de traitement (50) des premiers signaux ($S_{det}$) indiquant un ou plusieurs paramètres (H, D, S) correspondants dudit fil de contact (101) pendant que le véhicule ferroviaire (110) se déplace le long de la voie ferrée (105) ;
   - un ou plusieurs dispositifs (40) qui sont agencés pour fournir à l'unité de commande et de traitement (50) des deuxièmes signaux ($S_P$) appropriés pour calculer une position (P) du véhicule ferroviaire (110) le long de la ligne ferroviaire (105) ;

   dans lequel ladite unité de commande et de traitement (50) est configurée pour calculer :

   - sur la base d'au moins les premiers signaux ($S_{det}$) fournis par le biais desdits un ou plusieurs capteurs (1), une ou plusieurs valeurs réelles pour lesdits un ou plusieurs paramètres (H, D, S) du fil de contact (101) ; et
   - sur la base desdits deuxièmes signaux ($S_P$) reçus desdits un ou plusieurs dispositifs (40), la position réelle ($P_a$) du véhicule ferroviaire (110) le long de la ligne ferroviaire (105) à laquelle lesdites valeurs réelles pour lesdits un ou plusieurs paramètres (H, D, S) du fil de contact (101) ont été calculées ;

   dans lequel lesdits un ou plusieurs capteurs (1) comprennent au moins :

   - un émetteur optique (20) et un récepteur optique (21) associé agencés mutuellement pour fournir des signaux ($S_{det}$) indiquant un paramètre dimensionnel réel ($D_a$) du fil de contact (101), ledit émetteur optique (20) et ledit récepteur optique (21) associé comprenant une paire d'émetteur à base de laser et de récepteur associé ; et
   - un premier capteur optique (31) et un deuxième capteur optique (32) mutuellement agencés pour fournir des signaux ($S_{det}$) indiquant un décalage réel ($S_a$) du fil de contact (101) par rapport à une position de référence, **caractérisé en ce que** ledit premier capteur optique (31) et ledit deuxième capteur optique (32) comprennent un premier réseau de capteurs laser (31) et un deuxième réseau correspondant de capteurs laser (32) espacés du premier réseau de capteurs laser (31), et **en ce que** le système de commande (150) comprend en outre un premier module logiciel (45) configuré pour réaliser un contrôle de validation afin de confirmer l'exactitude d'une partie identifiée d'un fil de contact (101), dans lequel ledit contrôle de validation est basé sur une corrélation entre la valeur de décalage réelle ($S_a$) calculée par l'unité de commande et de traitement (50) pour la partie identifiée et une valeur de décalage prédite ($S_P$) précalculée par le premier module logiciel (45) pour ladite partie identifiée.

2. Système de commande (150) selon la revendication 1, dans lequel ladite unité de commande et de traitement (50) est configurée pour calculer une ou plusieurs valeurs réelles pour au moins un desdits un ou plusieurs paramètres (H, D, S) du fil de contact (101) sur la base également des deuxièmes signaux ($S_P$) fournis par au moins un desdits un ou plusieurs dispositifs (40).

3. Système de commande (150) selon la revendication 1 ou 2, dans lequel il comprend une unité d'élaboration (70) qui est agencée pour comparer les valeurs réelles calculées par l'unité de commande et de traitement (50) pour chacun des un ou plusieurs paramètres (H, D, S) avec des seuils correspondants et pour générer un signal d'alerte ($S_a$) correspondant si une valeur réelle calculée des un ou plusieurs paramètres (101) dépasse le seuil respectif.

4. Système de commande (150) selon l'une quelconque des revendications 1 à 3, dans lequel lesdits un ou plusieurs capteurs (1) comprennent en outre un ou plusieurs capteurs de proximité (10) configurés pour fournir des signaux ($S_{det}$) indiquant la distance réelle ($H_a$) du fil de contact (101) par rapport à une position de référence.

5. Système de commande (100) selon la revendication 4, dans lequel lesdits un ou plusieurs capteurs de proximité (10) comprennent une pluralité de capteurs laser (10).

6. Système de commande (150) selon la revendication 1, dans lequel ladite ligne aérienne d'alimentation électrique (100) comprend une pluralité de poteaux (102) en porte-à-faux positionnés le long de la ligne ferroviaire (105), et dans lequel ledit premier réseau de capteurs laser (31) et ledit deuxième réseau correspondant de capteurs laser (32) sont agencés pour fournir à l'unité de commande et de traitement (50) des signaux ($S_{det}$) appropriés pour localiser la position d'un poteau (102) identifié pendant que le véhicule ferroviaire (110) se déplace le long de la ligne ferroviaire (105), et dans lequel le système (150) comprend en outre un deuxième module logiciel (46) configuré pour réaliser un contrôle de validation afin de confirmer l'exactitude d'un poteau (102) localisé, ledit contrôle de validation étant basé sur une corrélation entre la position localisée calculée par l'unité de commande et de traitement (50) et une position prédite précalculée par le deuxième module logiciel (46) pour ledit poteau (102) localisé.

7. Système de commande (150) selon l'une quelconque des revendications 1 à 6, dans lequel lesdits un ou plusieurs dispositifs (40) comprennent au moins un capteur inertiel multi-axes (41) approprié pour être monté à bord du véhicule ferroviaire (110), ledit au moins un capteur inertiel multi-axes comprend au moins l'un d'un gyroscope multi-axes (41) et/ou d'un accéléromètre multi-axes (42).

8. Système de commande (150) selon l'une quelconque des revendications précédentes, dans lequel il comprend un serveur (95) qui est configuré pour élaborer, sur la base de valeurs de référence prédéfinies et de valeurs effectivement calculées ($H_a$, $D_a$, $S_a$) pour lesdits un ou plusieurs paramètres (H, D, S), un programme de maintenance préventive pour le fil de contact (101).

9. Véhicule ferroviaire (110), **caractérisé en ce qu'**il comprend, ou il est adapté pour interagir avec, un système de commande (150) selon l'une quelconque des revendications 1 à 8.

10. Procédé (200) de surveillance d'un fil de contact (101) d'une ligne aérienne d'alimentation électrique (100) installée le long d'une ligne ferroviaire (105) associée, **caractérisé en ce qu'**il comprend au moins les étapes suivantes :

- (205) : la fourniture, au moyen d'un ou plusieurs capteurs (1) qui sont appropriés à être montés à bord d'un véhicule ferroviaire (100), des premiers signaux ($S_{det}$) indiquant un ou plusieurs paramètres (H, D, S) correspondants dudit fil de contact (101) pendant que le véhicule ferroviaire (110) se déplace le long de la voie ferrée (105), dans lequel lesdits un ou plusieurs capteurs (1) comprennent au moins :

- un émetteur optique (20) et un récepteur optique (21) associé agencés mutuellement pour fournir des signaux ($S_{det}$) indiquant un paramètre dimensionnel réel ($D_a$) du fil de contact (101), ledit émetteur optique (20) et ledit récepteur optique (21) associé comprenant une paire d'émetteur à base de laser et de récepteur associé ; et
- un premier capteur optique (31) et un deuxième capteur optique (32) agencés mutuellement pour fournir des signaux ($S_{det}$) indiquant un décalage réel ($S_a$) du fil de contact (101) par rapport à une position de référence, lesdits un premier capteur optique (31) et un deuxième capteur optique (32) comprenant un premier réseau de capteurs laser (31) et un deuxième réseau de capteurs laser (32) correspondant espacé du premier réseau de capteurs laser (31) ;

- (210) : la fourniture, au moyen d'un ou de plusieurs dispositifs (40), de deuxièmes signaux ($S_P$) appropriés pour calculer une position (P) du véhicule ferroviaire (1) le long de la ligne ferroviaire (10) ;
- (215) : le calcul, au moyen d'une unité de commande et de traitement (50) :

- d'une ou plusieurs valeurs réelles pour ledit paramètre dimensionnel ($D_a$) et ledit décalage ($S_a$) du fil de contact (101), sur la base d'au moins les premiers signaux ($S_{det}$) fournis par ledit émetteur optique (20) et un récepteur optique (21) associé et par lesdits premier capteur optique (31) et deuxième capteur optique (32), respectivement ; et,
- la position réelle ($P_a$) du véhicule ferroviaire (105) le long de la ligne ferroviaire (105) à laquelle lesdites valeurs réelles pour ledit paramètre dimensionnel ($D_a$) et ledit décalage ($S_a$) du fil de contact (101) ont été calculées, sur la base desdits deuxièmes signaux ($S_P$) reçus desdits un ou plusieurs dispositifs (40) ;

et **en ce que** le procédé (200) comprend en outre, après ladite étape (215) de calcul, les étapes de :

- (221) : prédiction d'une valeur de décalage ($S_P$) pour une partie prochaine du fil de contact (101) ; et
- (222) : réalisation, au moyen d'un premier module logiciel (45), d'un contrôle de validation sur la base d'une corrélation entre la valeur de décalage prédite ($S_P$) et la valeur de décalage réelle ($S_a$) calculée par l'unité de commande et de traitement (50) sur la base des premiers signaux ($S_{det}$) indiquant un décalage réel ($S_a$) du fil de contact (101) pour la partie prochaine, fournis par ledit premier capteur optique (31) et ledit deuxième capteur optique (32) ;

- (223) : validation ou rejet de la valeur réelle de décalage ($S_a$) calculée sur la base du résultat du contrôle de validation réalisé à l'étape (222).

FIG.1

EP 3 835 169 B1

FIG.2

EP 3 835 169 B1

FIG.3

EP 3 835 169 B1

FIG.4

FIG.5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2966400 A1
- EP 2404777 A1